**Europäisches Patentamt**

**European Patent Office**

**Office européen des brevets**

(19)

(11) Veröffentlichungsnummer : **0 016 182**
**B1**

(12)     **EUROPÄISCHE PATENTSCHRIFT**

(45) Veröffentlichungstag der Patentschrift :
28.04.82

(21) Anmeldenummer : **79900974.1**

(22) Anmeldetag : **21.07.79**

(86) Internationale Anmeldenummer :
**PCT/DE 79/00076**

(87) Internationale Veröffentlichungsnummer :
**WO WO/8000336 (06.03.80 Gazettee 80/05)**

(51) Int. Cl.³ : **C 03 B  23/035, C 03 B  23/025**

(54) **Verfahren zum Herstellen von geformten Glasteilen aus Flachglas.**

(30) Priorität : **09.08.78 DE 2834867**

(43) Veröffentlichungstag der Anmeldung :
**01.10.80 (Patentblatt 80/20)**

(45) Bekanntmachung des Hinweises auf die Patenterteilung : **28.04.82 Patentblatt 82/17**

(84) Benannte Vertragsstaaten :
**CH FR GB SE**

(56) Entgegenhaltungen :
**DE - A - 2 708 409**
**FR - A - 2 098 458**
**FR - A - 2 241 503**
**GB - A - 1 043 136**
**US - A - 3 177 060**
**US - A - 3 468 645**
**US - A - 3 607 186**

(73) Patentinhaber : **Schott Glaswerke**
**Hattenbergstrasse 10**
**D-6500 Mainz (DE)**

(72) Erfinder : **Juras, Karl-Heinz**
**Am Stollhenn 49**
**D-6500 Mainz-Mombach (DE)**

(74) Vertreter : **Rasper, Joachim, Dr.**
**Bierstadter Höhe 22**
**D-6200 Wiesbaden (DE)**

Imprimerie Jouve, 18, rue St-Denis, 75001 Paris, France

Verfahren zum Herstellen von geformten Glasteilen aus Flachglas

Die Erfindung betrifft ein Verfahren zum Herstellen von geformten Glasteilen aus Flachglas, bei welchem eine zugeschnittene Flachglasplatte erhitzt und in eine Vakuumform eingesenkt wird, wobei während der Erhitzung die erweichende Platte am Absenken gehindert wird.

Flachglas wurde bisher so verformt, daß eine auf die entsprechende Größe zurechtgeschnittene Platte auf eine entsprechende Form gelegt, erhitzt und durch Eigengewicht in bzw. auf die Form gesenkt wurde, wobei das Senken gegebenenfalls zusätzlich durch Formgebungswerkzeuge unterstützt wurde. Damit kann nur ein relativ geringer Verformungsgrad erreicht werden, wie er z.B. zum Herstellen von Panoramascheiben bei der Kraftfahrzeugverglasung benötigt wird. Bei diesem Verfahren erreichen Form und Glas die gleiche Temperatur; das Glas darf nicht sehr erhitzt werden, weil es sonst klebt. Zwischen Form und Glas müssen Trennmittel gegeben werden, oder die Formen müssen mit einem Stoff überzogen werden, der sich am Glas nicht abprägt, z.B. Gewebe aus Glasfasern.

Bei anderen Verfahren wird das Glas in eine Form gesaugt, um den Verformungsvorgang zu beschleunigen, und zwar in eine unter der Glasplatte liegende Form (US-A-3 607 186), oder in eine darüber befindliche Form (US-A-3 468 645). Hiermit ist zwar ein großer Verformungsgrad zu erreichen, die Wanddickenverteilung ist aber sehr ungünstig, weil an allen Stellen, an denen das Glas beim Erwärmen abgestützt wird, eine Abkühlung erfolgt, die durch die Heizquelle nicht ausgeglichen werden kann. Der Abkühlungseffekt ist umso größer, je größer die Temperaturdifferenz zwischen Glas und Form ist. Je größer der gewünschte Verformungsgrad ist, umso höher muß das Glas erhitzt werden. Die Klebetemperatur kann aber nicht im gleichen Maße erhöht werden. Der Abkühleffekt wird also umso größer, je größer der Verformungsgrad sein soll. Artikel mit komplizierter Gestalt, wie z.B. ein Glasrost, sind mit brauchbarer Qualität mit diesem Verfahren ebenfalls nicht herzustellen.

Ziel der vorliegenden Erfindung ist ein Verfahren zum Verformen von Flachglas, das die geschilderten Nachteile herkömmlicher Verfahren vermeidet.

Dieses Ziel wird mit einem Verfahren gemäß den Patentansprüchen erreicht.

Bei dem erfindungsgemäßen Verfahren wird also die zu verformende Platte so auf die Form gelegt, daß sie diese nur am Rand berührt, und der von Glas und Form umschlossene Hohlraum wird weitgehend abgedichtet. Während des Erwärmens der Platte wird im Hohlraum ein Überdruck erzeugt, der verhindert, daß sich das Glas mit abnehmender Viskosität auf hervorstehende Teile der Form setzt und abkühlt. Das Glas kann dadurch auf die für die Formgebung erforderliche, niedrige Viskosität gebracht werden. Sobald dies erreicht ist, wird der Hohlraum entlüftet und evakuiert. Der Atmosphärendruck bringt das plastische Glas in die gewünschte Gestalt. Die Dickenverteilung wird durch vorherige Abkühlung nicht beeinträchtigt, es ist ein hoher Verformungsgrad mit guter Dickenverteilung möglich.

Zwar ist bereits der Vorschlag gemacht worden, die auf Verformungstemperatur erhitzten Glasscheiben durch ein Gaspolster zu unterstützen (US-PS 3 468 645), jedoch ist diese Maßnahme zu dem Zwecke angewandt worden, um die Glasplatte von der Erhitzungsstation in die Verformungsstation transportieren zu können, ohne mechanische Stützelemente anwenden zu müssen.

Die Erfindung wird nachfolgend an einem Beispiel unter Hinweis auf die Zeichnungen näher erläutert; es zeigen:

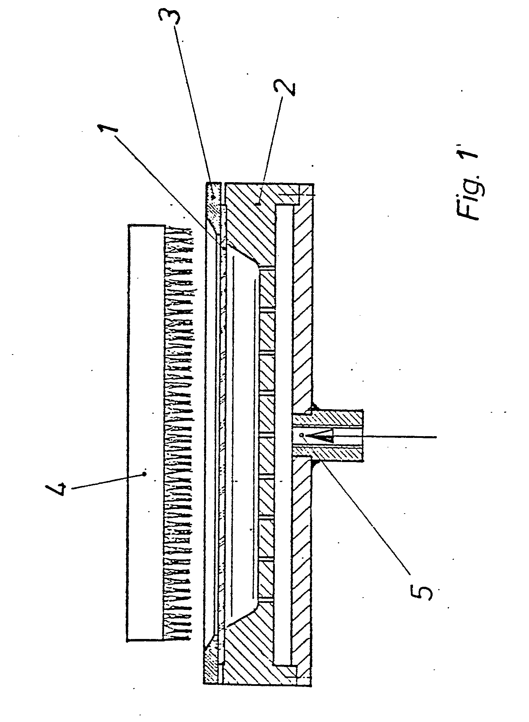

Figur 1 einen Schnitt durch eine Vorrichtung des Verfahrens mit einer Flachglasscheibe während des Erhitzens derselben, und

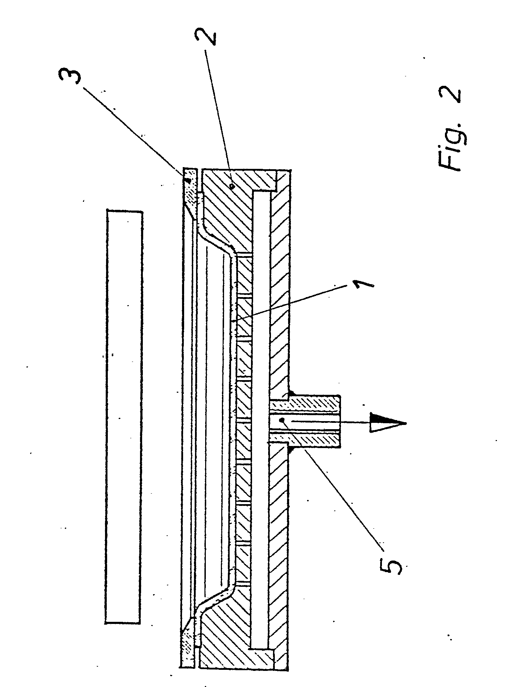

Figur 2 einen Schnitt durch die gleiche Vorrichtung nach dem Absenken der erweichten Scheibe.

Ausführungsbeispiel

Zur Herstellung eines Grillrostes mit waschbrettartiger Gestalt wird eine Flachglasplatte 1 aus Duran 50 von 410 × 340 × 3 mm auf eine auf etwa 550 °C vorgeheizte Form 2 mit rechteckigem Umfang aufgelegt, welche mit einer Randabdichtung versehen ist.

Auf die Scheibe wird sodann ein Abdeckring (Anpreßrahmen) 3 aufgelegt und unter einen Druck von etwa 10 kp gesetzt.

Dann werden über der Form angeordnete Brenner 4 gezündet, und die Glasplatte wird auf etwa 900 °C erwärmt.

Sobald das Glas zu erweichen beginnt, wird durch eine Bohrung 5 am Boden der Form 2 Druckluft in ausreichender Stärke eingeblasen, um ein Absinken der erweichenden Platte zu verhindern. Erst dann, wenn die Platte den für die Formgebung ausreichenden Erweichungsgrad erreicht hat, wird der Hohlraum der From drucklos gemacht und durch Anwenden eines Unterdruckes (0,6 bar) das Absenken der erweichten Glasscheibe und deren Anlegen an das Profil der Form gefördert.

**Ansprüche**

1. Verfahren zum Herstellen von geformten Glasteilen aus Flachglas, bei welchem eine zugeschnittene Flachglasplatte (1) erhitzt und in eine Vakuum-Form (2) eingesenkt wird, wobei während der Erhitzung die erweichende Flachglasplatte (1) am Absenken gehindert wird, dadurch gekennzeichnet, daß, indem durch Bohrungen in der Form (2) ein Gas in den Zwischenraum zwischen Form (2) und Flachglasscheibe (1) geblasen wird, die Flachglasplatte (1) während des Erhitzens von einem Gaspolster getragen wird, bis sie die erforderliche niedrige Viskosität erreicht hat, worauf sie durch Anwendung von Vakuum im Zwischenraum zwischen Form (2) und Flachglasplatte (1) auf die Form (2) abgesenkt wird.

2. Verfahren nach Anspruch 1, dadurch gekennzeichnet, daß die Flachglasplatte (1) von oben relativ gasdicht auf den Umfang der Form (2) aufgepreßt wird.

3. Verfahren nach Anspruch 2, dadurch gekennzeichnet, daß eine Form (2) mit einer hitzebeständigen Randabdichtung verwendet wird.

4. Verfahren nach einem der Ansprüche 1 bis 3, dadurch gekennzeichnet, daß auf die auf den Umfang der Form (2) aufgelegte Flachglasscheibe (1) eine diesem Umfang entsprechende Randabdeckung (3) aufgelegt wird.

5. Verfahren nach einem der Ansprüche 1 bis 4, dadurch gekennzeichnet, daß Luft eingeblasen wird.

### Claims

1. A method of manufacturing formed glass parts from flat glass in which a tailored flat glass blank (1) is heated and sunk into vacuum mould (2), the softening flat glass plate (1) being prevented from dropping during the heating-up phase, characterised in that by injecting a gas through holes in the mould (2) into the space between mould (2) and flat glass plate (1), the flat glass plate (1) is supported during the heating-up phase by a gas cushion until it has achieved the required low viscosity whereupon it is dropped on to the mould (2) by application of a vacuum in the interspace between mould (2) and flat glass plate (1).

2. A method according to claim 1, characterised in that the flat glass plate (1) is pressed from above in a relatively gas tight manner against the periphery of the mould (2).

3. A method according to claim 2, characterised in that a mould (2) is used which is provided with a heat-resistant peripheral seal.

4. A method according to any claim 1 to 3, characterised in that a peripheral cover (3) corresponding to the peripheral outline of the mould (2) is placed on top of the flat glass plate (1) which is positioned on the periphery of the mould.

5. A method according to any claim 1 to 4, characterised in that air is injected.

### Revendications

1. Procédé pour la fabrication d'objets en verre moulés à partir de verre plat, du genre dans lequel une plaque de verre plat coupée aux dimensions adéquates est chauffée et introduite dans un moule sous vide, l'affaissement de la plaque de verre plat ramollie étant empêché pendant la durée du chauffage, caractérisé en ce qu'un gaz est introduit par des perçages pratiqués dans le moule (2) dans l'espace libre compris entre ce moule (2) et la plaque (1) de verre plat, cette dernière (1) étant supportée au cours du chauffage par un coussin de gaz jusqu'à ce qu'elle ait atteint la faible viscosité nécessaire, pour être ensuite appliquée sur le moule (2) en réalisant le vide dans l'espace qui est compris entre le moule (2) et la plaque (1) de verre plat.

2. Procédé selon la revendication 1, caractérisé en ce que la plaque de verre plat est appliquée sous pression, de manière sensiblement étanche aux gaz, sur la périphérie du moule (2).

3. Procédé selon la revendication 2, caractérisé en ce que l'on utilise un moule (2) muni d'un bord étanche résistant à la chaleur.

4. Procédé selon l'une quelconque des revendications 1 à 3, caractérisé en ce que l'on dispose sur la plaque (1) de verre plat déposée sur le contour du moule (2) un cadre d'étanchéité (3) dont la forme correspond à celle de ce contour.

5. Procédé selon l'une quelconque des revendications 1 à 4, caractérisé en ce que ledit gaz est de l'air.

Fig. 1

0016 182

Fig. 2